# EUROPÄISCHE PATENTSCHRIFT

(11) **EP 0 638 154 B1**
(45) Veröffentlichungstag und Bekanntmachung des Hinweises auf die Patenterteilung: **08.11.1995**
(21) Anmeldenummer: 93908931.4
(22) Anmeldetag: 09.04.1993
(51) Int. Cl.: F16K 31/44, F16K 3/24, F16K 1/12

(54) **VENTIL ZUR STEUERUNG EINES UNTER DRUCK STRÖMENDEN, FLUIDEN MEDIUMS**
CONTROL VALVE FOR A FLUID MEDIUM FLOWING UNDER PRESSURE
SOUPAPE POUR LA REGULATION DU DEBIT D'UN FLUIDE S'ECOULANT SOUS PRESSION

(30) Priorität: 27.04.1992 DE 4213809
(43) Veröffentlichungstag der Anmeldung: 15.02.1995
(73) Patentinhaber: BEBRO-ELECTRONIC BENGEL & BROSS GmbH, D-72636 Frickenhausen (DE)
(72) Erfinder: FROMM, Alfred, D-72768 Reutlingen (DE)
(74) Vertreter: Hoeger, Stellrecht & Partner
(86) Internationale Anmeldenummer: EP9300876
(87) Internationale Veröffentlichungsnummer: WO9322590

(56) Entgegenhaltungen:
- DD-A- 245 937
- DE-A- 2 207 580
- FR-E- 86 695
- US-A- 3 654 950

## Beschreibung

Die Erfindung betrifft ein Ventil zur Steuerung eines unter Druck strömenden, fluiden Mediums mit Einlaßöffnungen und Auslaßöffnungen, mit einem vom Medium axial durchströmten Eingangsteil, mit einem relativ zum Eingangsteil axial zwischen einer Schließ- und Offenstellung verschieblichen, hülsenförmigen Steuerteil, mit einem ersten, radial vorstehenden, elastischen Dichtring und mit einer ersten, ringförmigen Dichtkante, die in Schließstellung des Steuerteils gegen den ersten Dichtring abdichtend anpreßbar ist, wobei das verschiebliche Steuerteil von einem Ventilgehäuse umschlossen und der Raum zwischen dem Steuerteil und Ventilgehäuse mit dem unter Druck strömenden, fluiden Medium beaufschlagt ist, so daß ein Steuerteil im wesentlichen kein resultierender Druck in Axialrichtung vorliegt und daher das Steuerteil ohne wesentlichen Kraftaufwand verschiebbar ist, ein zweiter, radial vorstehender, elastischer Dichtring in axialem Abstand vom ersten Dichtring vorgesehen ist und eine zweite ringförmige Dichtkante in Schließstellung des Steuerteils gegen den zweiten Dichtring abdichtend anpreßbar ist.

Ein derartiges Ventil ist aus US-A-3,654,950 bekannt. Die dort Vorgesehenen ersten und zweiten Dichtringe sind U-förmig aus flexiblem Material mit zwei Schenkeln ausgebildet, zwischen denen eine Feder eingesetzt ist. Kurz vor Erreichen der SchließStellung wird der eine Schenkel aufgrund eines Druckdifferentials kräftig gegen eine der ersten und zweiten, ringförmigen Dichtkanten gepreßt. Aufgrund dieser kräftigen anpressung kommt es notwendigerweise zu einem relativ großen flächenhaften Kontakt zwischen Dichtring und Dichtkante, so daß beim Öffnen des Ventils eine relativ große Kraft aufgebracht werden muß.

Wenn solche Ventile im Bergwerks- und Untertagebau verwendet werden, werden sie von einem zentralsteuergerät über an sich bekannte Datenleitungen gesteuert und versorgt. Da in diesen Datenleitungen im Hinblick auf eine mögliche Explosionsgefahr nur kleine elektrische Ströme fließen sollen, setzt die versorgung der Ventile einen geringen Eigenstrombedarf und daher eine möglichst kleine Betätigungskraft, insbesondere Öffnungskraft voraus. Das bekannte Ventil erfordert jedoch wegen der erforderlichen großen Öffnungskraft einen hohen Eigenstrombedarf.

Es ist Aufgabe der Erfindung, ein gattungsgemäßes Ventil so zu verbessern, daß es bei einem nahezu verschwindenden Kraftaufwand leicht zu öffnen ist, wobei das Ventil insbesondere auf die Steuerung von unter sehr hohem Druck strömenden fluiden Medien gestatten soll.

Die Aufgabe wird bei einem gattungsgemäßen Ventil durch die Erfindung dadurch gelöst, daß die ersten und zweiten, ringförmigen Dichtkanten relativ scharf und schneidenartig ausgebildet sind und in Schließstellung des Ventils einen linienhaften, kreisförmigen Dichtungsbereich zwischen den ersten und zweiten Dichtringen einerseits und den ersten und zweiten Dichtkanten andererseits bilden

Weitere Merkmale der Erfindung ergeben sich aus den Ansprüche 2-14.

Die nachstehende Beschreibung bevorzugter Ausführungsformen der Erfindung dient im Zusammenhang mit beiliegender Zeichnung der weiteren Erläuterung.

Es zeigen:
- Fig. 1: eine geschnittene Darstellung eines erfindungsgemäßen Ventils zur Steuerung eines unter Druck strömenden, fluiden Mediums in Schließstellung;
- Fig. 2: eine geschnittene Darstellung des Ventils aus Fig. 1 in Offenstellung
- Fig. 3: eine vergrößerte, geschnittene Einzeldarstellung eines rohrförmigen Eingangsteils und eines auf ihm axial verschieblichen, hülsenförmigen Steuerteils in Schließstellung;
- Fig. 4: eine Schnittansicht einer zweiten Ausführungsform eines erfindungsgemäßen Ventils in Schließstellung;
- Fig. 5: eine Schnittansicht einer dritten Ausführungsform eines erfindungsgemäßen Ventils in Offenstellung;
- Fig. 6: eine Schnittansicht einer vierten Ausführungsform eines erfindungsgemäßen Ventils in Offenstellung;
- Fig. 7: eine Schnittansicht einer fünften Ausführungsform eines erfindungsgemäßen Ventils in Offenstellung.

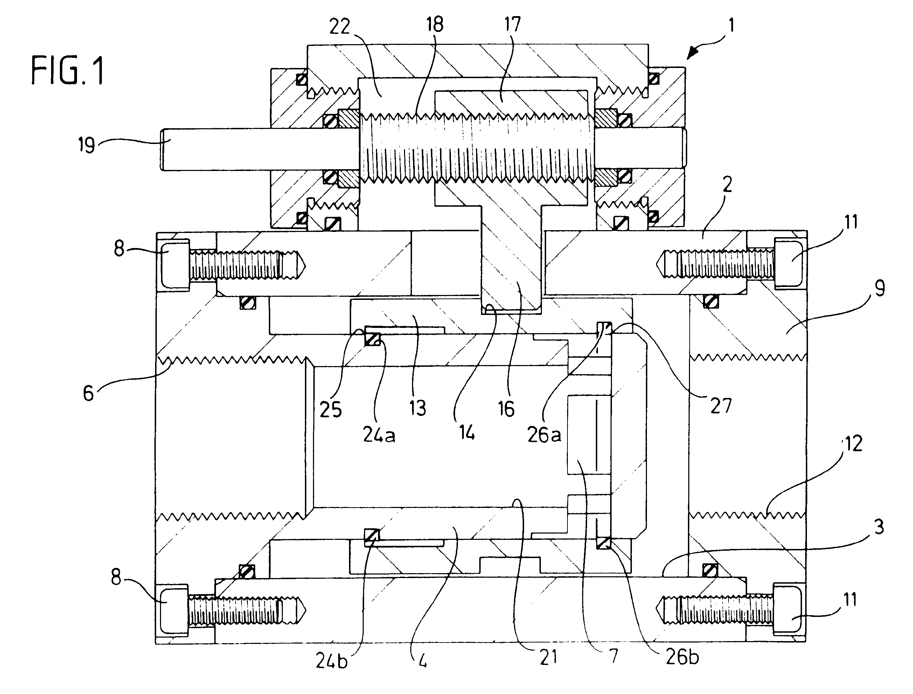

Ein in Fig. 1 in Schliepstellung dargestelltes Ventil 1 weist ein Ventilgehäuse 2, vorzugsweise aus Metall auf, in dem sich eine axiale Ventilbohrung 3 befindet. In der Ventilbohrung 3 ist ein rohrförmiges, vorzugsweise ebenfalls metallisches Innen- oder Eingangsteil 4 angeordnet, an dessen einem Ende, eine mit einem Gewinde versehene Einlaßöffnung 6 vorgesehen und an dessen anderem Ende offene Auslaßbereiche 7 angeordnet sind. Das rohrförmige Eingangsteil 4 ist fest und dicht mit dem Ventilgehäuse 2 mittels Schrauben 8 verbunden. Am Ventilgehäuse 2 ist ferner eine Abdeckplatte 9 mittels Schrauben 11 befestigt, in der sich eine ebenfalls mit Gewinde versehene Auslaßöffnung 12 befindet.

Das rohrförmige Eingangsteil 4 ist von einem hülsenförmigen Außen- oder Steuerteil 13, vorzugsweise aus Metall umgeben, welches auf dem rohrförmigen Eingangsteil 4 axial verschieblich angeordnet ist. An dem äußeren Umfang des hülsenförmigen Steuerteils ist eine Nut 14 angeordnet, in die als Antriebsglied ein Vorsprung 16 eingreift. Der Vorsprung 16 ist einstückig mit einer Mutter 17 verbunden, die auf eine Gewindestange 18 paßt. Fest mit der Gewindestange 18 ist eine Welle 19 verbunden, deren Rotation ein axiales Bewegen der Mutter 17 und des Vorsprungs 16 bewirkt, so daß das hülsenförmige Steuerteil 13 axial relativ zum rohrförmigen Eingangsteil 4 verschoben, und damit das Ventil 1 von seiner Schließ- in seine Offenstellung und umgekehrt geschaltet wird. Mit der Welle 19 kann beispielsweise ein nicht dargestellter, kleiner Elektromotor mit geringem Stromverbrauch verbunden sein. Auch eine Handbetätigung des Ventils 1 ist möglich.

Der gesamte Innenraum 21 des Ventils (Ventilbohrung 3), einschließlich des Raumes 22, in dem sich die Gewindestange 19 mit der dazugehörigen Mutter 17 ist stets - insbesondere in Offenstellung - mit dem unter Druck stehenden, fluiden Medium, z.B. Wasser, Öl oder dgl. gefüllt. Auf diese Weise ist das hülsenförmige Steuerteil 13 gänzlich von unter Druck stehendem Medium umschlossen und nahezu ohne Kraftaufwand relativ zum Eingangsteil 4 verschiebbar.

In der in Fig. 1 gezeigten Schließstellung des Ventils 1 ist die Einlaß 6 gegenüber der Auslaßöffnung 12 dicht verschlossen. Das hülsenförmige Steuerteil 13 ist auf dem rohrförmigen Innenteil 4 - in Fig. 1 nach rechts - in die Schließstellung geschoben.

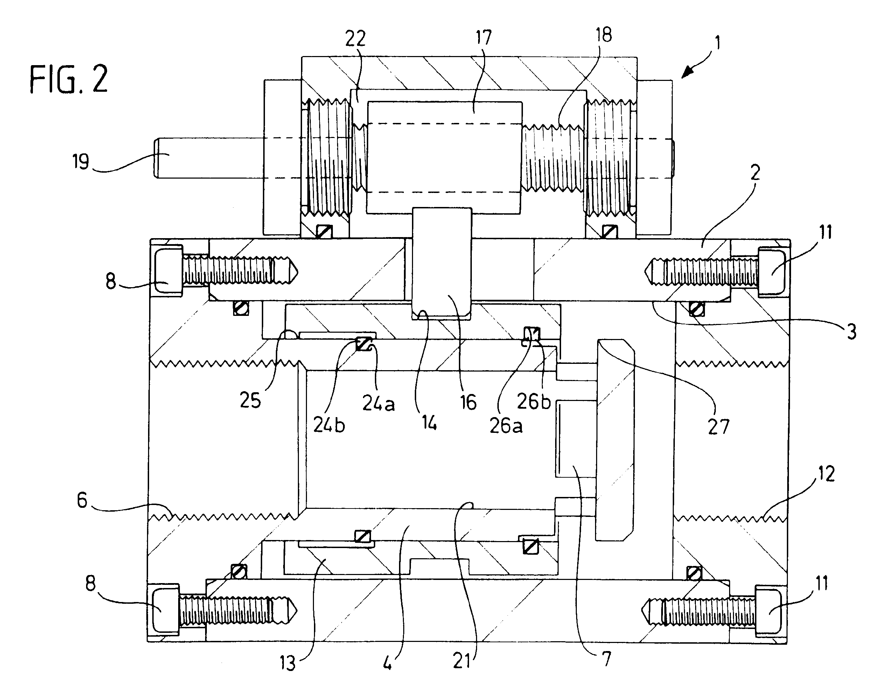

In Fig. 2 ist das Ventil 1 in seiner Offenstellung dargestellt, so daß das unter Druck stehende, fluide Medium von der Einlaßöffnung 6 über den Innenraum 21 und die Auslaßbereiche 7 in die Auslaßöffnung 12 gelangt. Das hülsenförmige Steuerteil 13 ist dabei auf den rohrförmigen Eingangsteil 4 in Offenstellung - in Fig. 2 nach links - verschoben.

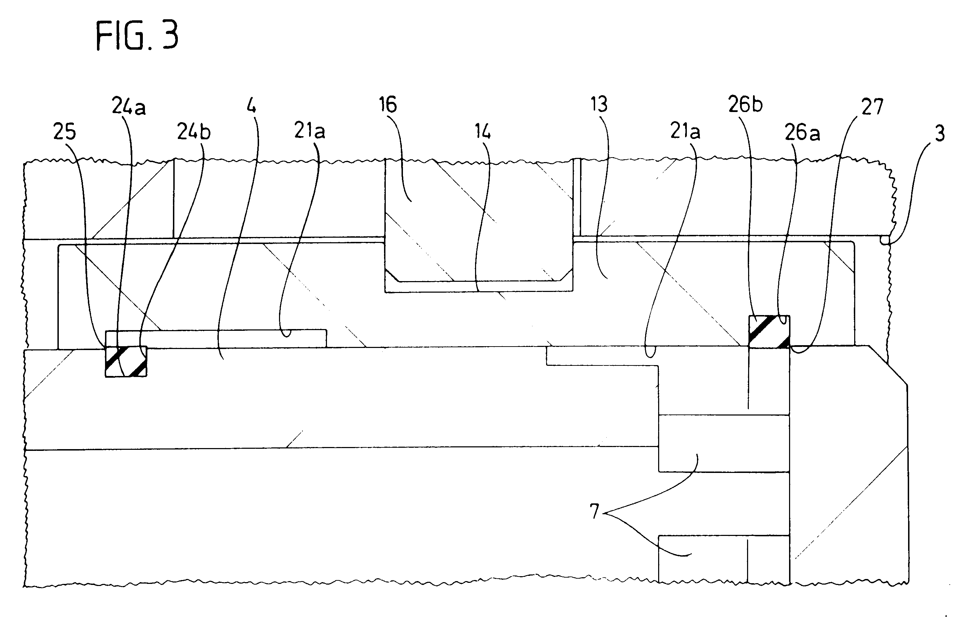

Die Fig. 3 zeigt eine vergrößerte Einzeldarstellung in Schnittansicht des rohrförmigen Eingangsteils 4 und des auf ihm axial verschieblichen, hülsenförmigen Steuerteils 13 in Schließstellung des Ventils 1. Am äußeren Umfang des Eingangsteils 4 ist eine ringförmige Nut 24a angeordnet, in die ein erster, etwas über den äußeren Umfang des Eingangsteils 4 radial vorstehender Dichtring 24b von im wesentlichen rechteckigem oder kreisförmigem Querschnitt (O-Ringdichtung) eingelegt ist. Der Nut 24a und dem Dichtring 24b benachbart ist am hülsenförmigen Steuerteil 13 eine erste ringförmige Dichtkante 25 zugeordnet, die in Schließstellung des Ventils zur Anlage an den Dichtring 24b gelangt. Die Nut 24a, der Dichtring 24b und die Dichtkante 25 sind in der Nähe der Einlaßöffnung 6 des Ventils angeordnet.

In der Nähe der Auslaßöffnung 12 des Ventils 1 befindet sich eine auf der inneren Umfangsfläche des hülsenförmigen Steuerteils 13 angeordnete, ringförmige Nut 26a, in die ein etwas über die innere Umfangsfläche vorstehender, zweiter Dichtring 26b (O-Ringdichtung) eingelegt ist. Eine in der Nähe der Nut 26a und des Dichtringes 26b an der äußeren Umfangsfläche des rohrförmigen Eingangsteils 4 angeordnete, zweite Dichtkante 27 kommt in Schließstellung des Ventils 1 an dem Dichtring 26b im wesentlichen zur gleichen Zeit zur Anlage, zu der auch die Dichtkante 25 auf den Dichtring 24b trifft. Die Dichtkanten 25, 26 greifen dabei abdichtend entlang von Kreisringlinien, also mit relativ kleinen Flächen an den Dichtringen 24b, 26b an. Zwischen dem rohrförmigen Eingangsteil 4 und dem hülsenförmigen Steuerteil 13 sind Zwischenräume 21a ausgebildet, die in Schließstellung aufgrund fehlender Abdichtung mit dem unter Druck stehenden, fluiden Medium gefüllt sind.

Die Funktionsweise des Ventils ist aus den Figuren 1 und 2 in Verbindung mit Fig. 3 erkennbar. In Offenstellung des Ventils 1 (Fig. 2) ist das hülsenförmige Steuerteil 13 derart axial relativ zum rohrförmigen Eingangsteil 4 - in Fig. 2 nach links - verschoben, daß die ersten und zweiten Dichtkanten 25, 27 von den ersten und zweiten Dichtringen 24b, 26b entfernt sind, was es dem unter Druck strömenden, fluiden Medium ermöglicht, durch die Auslaßbereiche 7 und die Auslaßöffnung 12 auszuströmen.

In Schließstellung (Fig. 1 und 3) gelangen die Dichtkanten 25, 27 durch axiales Verschieben des hülsenförmigen Steuerteils 13 auf dem rohrförmigen Eingangsteil 4 - in Fig. 2 nach rechts - im wesentlichen simultan an den ihnen jeweils gegenüberliegenden Dichtringen 24b, 26b zur Anlage, während das fortwährend in den Zwischenräumen 21a befindliche, unter Druck strömende, das Steuerteil 13 allseitig umgebende Medium eine Verschiebung des Steuerteils 13 nahezu ohne Kraftaufwand ermöglicht.

Beim Schließvorgang baut sich ein Druck in den Zwischenräumen 21a auf, der die beiden Dichtringe 24b, 26b gegen die beiden, relativ scharfen, schneidenartigen Dichtkanten 25, 27 drückt, wodurch sich erstere etwas deformieren und jeweils linienhafte, kreisförmige Dichtungsbereiche an den Dichtkanten 25, 27 bilden. Zusätzlich werden die Dichtringe 24b, 26b durch das strömende Medium aufgrund einer Sogwirkung in dem jeweils hinter ihnen befindlichem Raum an die Dichtkanten 25, 27 gedrückt. In dieser Position schließt das Ventil 1 die Einlaßöffnung 6 nicht gegen die Auslaßöffnung 12 ab.

Das Ventil 1 läßt sich auch leicht, d.h. ohne wesentlichen Kraftaufwand öffnen, da die beiden Dichtkanten 25, 27 an den beiden Dichtringen 24b, 26b jeweils lediglich linienhafte, kreisringförmige Dichtflächen ausbilden, die selbst bei hohen Drücken des strömenden, fluiden Mediums durch lediglich kleinen Kraftaufwand von den Dichtringen getrennt werden können.

Auf diese Weise wird das Öffnen und Schliepen des Ventils mit nahezu verschwindendem Kraftaufwand ermöglicht. Das Ventil 1 ist darüberhinaus in geschlossenem wie in geöffnetem Zustand ohne jeglichen Kraftaufwand zu halten. Dies hat zur Folge, daß das Ventil im geschlossenen oder geöffneten Zustand ohne jeglichen motorischen Antrieb und ohne Antriebsstrom gehalten werden kann, da ein zum Öffnen und Schliepen benötigter Stellmotor nach Erreichen der Offen- bzw. Schliepstellung nicht betätigt zu werden braucht. Das Ventil wird also im geöffneten bzw. geschlossenen Zustand völlig "stromlos" betrieben und für den Öffnungs- und Schließvorgang sind nur sehr kleine Stellmotoren und minimale Ströme notwendig.

Statt der Dichtringe 24b, 26b mit kreisförmigem Querschnitt sind auch Dichtringe mit beispielsweise quadratischem, halbrundem, dreiecksformigem oder ovalem Querschnitt möglich.

Weiterhin können die etwas radial, über das rohrförmige Eingangsteil bzw. über das hülsenförmige Steuerteil 13 vorspringenden Dichtringe 24b, 26b auch durch fest an dem Eingangsteil 4 bzw. dem Steuerteil 13 angeordnete Kunststoffvorsprünge ersetzt werden, gegen welche die ihnen jeweils gegenüberliegenden, vorzugsweise metallischen Dichtkanten 25, 27 zur Anlage kommen.

Darüberhinaus läßt sich eine gute Dichtwirkung auch bei zwei unmittelbar aufeinandertreffenden Metallkanten oder Metallflächen erzielen, wenn statt der Kunststoffvorsprünge Metallvorsprünge verwendet werden.

Die Erfindung vermittelt ein mit niedrigen Herstellungskosten - es sind beispielsweise keine genauen Passungen erforderlich - anzufertigendes Ventil, das nahezu kraftlos direkt betätigt werden kann, das in jeder Schaltstellung (Offen- bzw. Schließstellung) stromlos betrieben werden kann und das auch gegen sehr hohe Drücke abdichtet. Das Ventil eignet sich somit in besonderem Maße zur Verwendung im Untertage- oder Bergwerksbau. Darüberhinaus ist auch eine Verwendung im Trinkwasserbereich sowie in Gas- und Druckluftanlagen möglich.

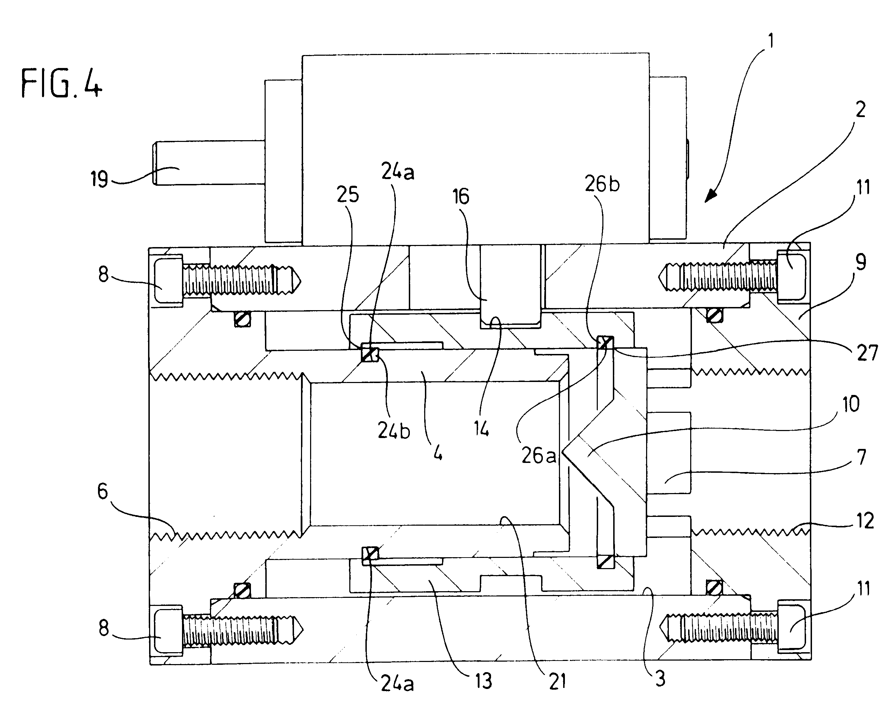

Die Fig. 4 zeigt eine abgewandelte, zweite Ausführungsform eines Ventils, bei der gegenüber Fig. 1 - 3 die Auslaßbereiche 7 modifiziert und die Dichtkante 27 nicht wie in Fig. 1 - 3 am stationären Innenteil 4, sondern an einem vorspringenden Teil 10 der ebenfalls stationären Abdeckplatte 9 ausgebildet sind. Die Auslaßbereiche 7 befinden sich zwischen dem Teil 10 und der Abdeckplatte 9. Im übrigen funktioniert das Ventil nach Fig. 4 ebenso wie dasjenige nach Fig. 1 - 3.

Bei den Ausführungsformen gemäß Fig. 1 - 3 bzw. 4 wirken jeweils eine stationär gehaltene Ringdichtung 24b mit einer beweglichen, am Steuerteil 13 vorgesehenen Dichtkante 25 sowie eine zusammen mit dem Steuerteil 13 bewegliche Ringdichtung 26b mit einer stationären Dichtkante 27 zusammen, wobei die stationäre Dichtkante 27 in Fig. 1 - 3 am Eingangsteil 4 und bei der Ausführungsform gemäß Fig. 4 am Teil 10 der Abdeckplatte 9 ausgebildet ist.

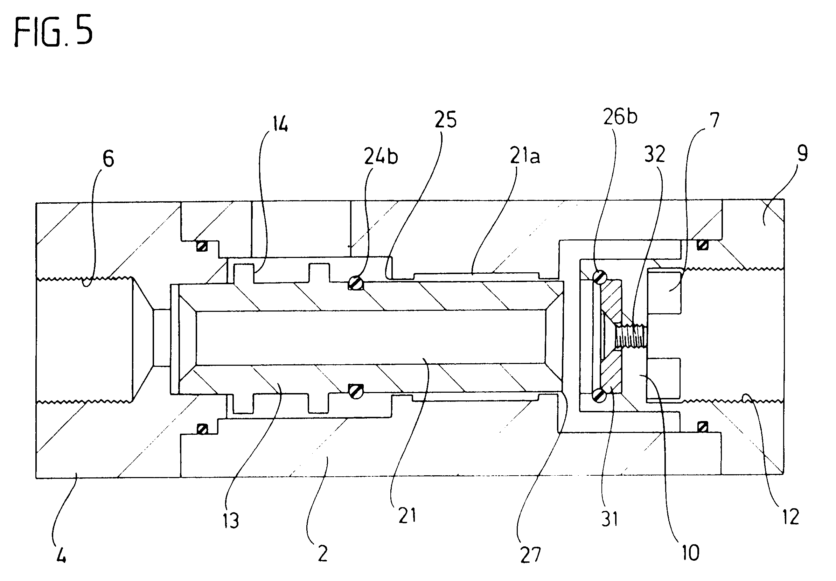

Die in Fig. 5 in Offenstellung dargestellte dritte Ausführungsform eines Ventils unterscheidet sich von den beiden Ausführungsformen gemäß Fig. 1 - 3 und 4 dadurch, daß der erste Dichtring 24b auf der Außenseite des Steuerteils 13 und zusammen mit diesem beweglich ausgebildet ist. Der Dichtring 24b wirkt mit einer stationär, an der Innenseite des Ventilgehäuses 2 ausgebildeten, ersten Dichtkante 25 zusammen.

Der zweite Dichtring 26b ist stationär am vorspringenden Teil 10 der Abdeckplatte 9 angeordnet und wirkt mit einer stirnseitig, am verschieblichen Steuerteil 13 ausgebildeten, zweiten Dichtkante 27 zusammen. Eine Scheibe 31, die mit einer Schraube 32 im Teil 10 festgehalten ist, hält den Dichtring 26b in einer zugeordneten Ringnut des Teils 10. Im übrigen funktioniert die Ausführungsform gemäß Fig. 5 ebenso wie die Ausführungsformen gemäß Fig. 1 - 4.

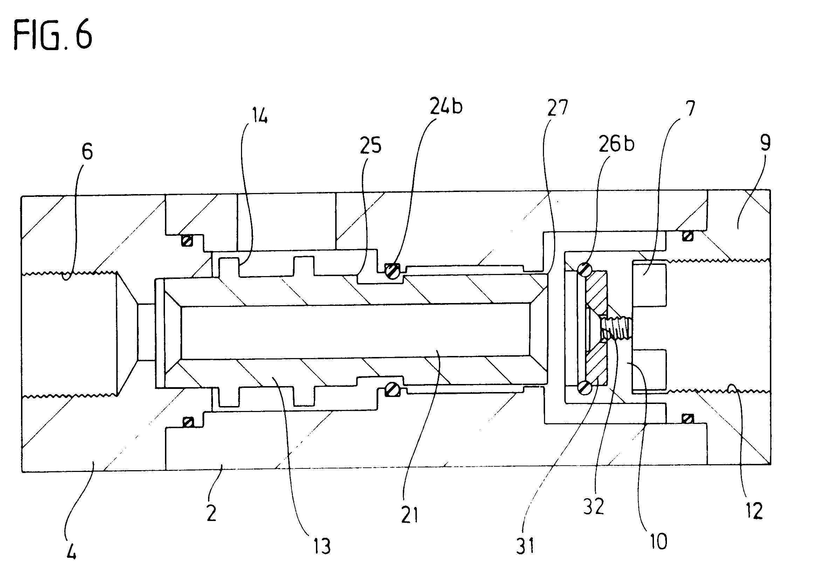

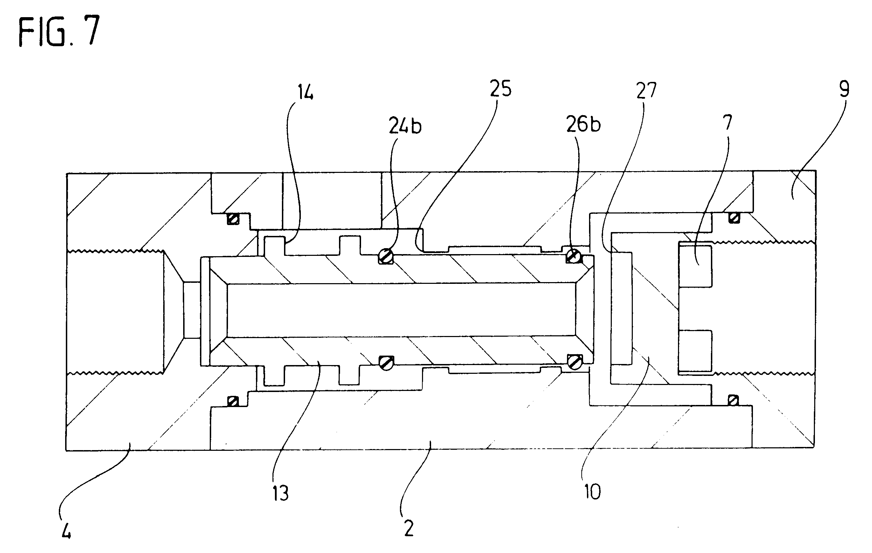

Bei den weiteren Ausführungsformen von Ventilen, wie sie in Fig. 6 und 7 in Offenstellung dargestellt sind, sind einander entsprechende Teile mit den gleichen Bezugszeichen wie in Fig. 1 - 5 bezeichnet. Während jedoch in Fig. 1 - 5 jeweils ein stationärer Dichtring (z.B. der Dichtring 26b in Fig. 5) und ein mit dem Steuerteil 13 beweglicher Dichtring (z.B. in Fig. 5 der Dichtring 24b) vorgesehen sind, die jeweils mit beweglichen bzw. stationären Dichtkanten (in Fig. 5 die Dichtkanten 27 bzw. 25) zusammenwirken, sind bei den Ausführungsformen gemäß Fig. 6 und 7 jeweils die ersten und zweiten Dichtringe 24b, 26b entweder gemeinsam stationär oder beweglich so angeordnet, daß sie mit ihrerseits gemeinsam beweglichen bzw. ortsfesten Dichtkanten 25, 27 zusammenwirken.

In Fig. 6 sind die ersten und zweiten Dichtringe 24b, 26b in entsprechenden Ringnuten des Ventilgehäuses 2 bzw. des Teils 10 der Abdeckplatte 9 stationär, d.h. unverschieblich, gehalten. Diese Dichtringe 24b, 26b wirken mit Steuerkanten 25 bzw. 27 zusammen, die in der dargestellten Weise am Steuerteil 13 ausgebildet und zusammen mit diesem beweglich sind.

Bei der Ausführungsform gemäß Fig. 7 schließlich wirken erste und zweite Dichtringe 24b, 26b, die am Steuerteil 13 ausgebildet und zusammen mit diesem beweglich sind, mit ersten und zweiten Dichtkanten 25, 27, die stationär am Ventilgehäuse 2 bzw. am vorspringenden Teil 10 der Abdeckplatte 9 ausgebildet sind.

Die Fig. 6 und 7 zeigen das Ventil jeweils in Offenstellung. Die Überführung in Schließstellung geschieht dadurch, daß das Steuerteil 13 in diesen Figuren jeweils nach rechts verschoben wird, bis die Dichtkanten 25, 27 an den Dichtringen 24b bzw. 26b abdichtend anliegen. Im übrigen funktionieren die Ausführungsformen gemäß Fig. 6 und 7 ebenso wie die Ausführungsformen gemäp Fig. 1 - 4. Insbesondere kann auch in Fig. 5 - 7 wiederum ein z.B. motorisch angetriebener Vorsprung 16 in die Nut 14 des Steuerteils 13 eingreifen. Bei den Ausführungsformen nach Fig. 5 - 7 ist das Steuerteil 13 nur einseitig im Eingangsteil 4 geführt. In diesem Falle dienen Teile der Innenseite des Ventilgehäuses 2 der zusätzlichen Führung des Steuerteils 13.

Aufgrund der anderen Anordnung der Dichtringe 24a, 26a liegt zwischen den Ausführungsformen gemäP Figur 1 bis 4 einerseits und 5 bis 6 andererseits noch ein weiterer Unterschied vor: Bei den Ausführungsformen nach Figur 1 bis 4 besteht im Schließzustand des Ventils keine Verbindung zwischen der Einlaßöffnung 6 und dem das Antriebsglied 16 enthaltenden Raum 22, weil eine solche Verbindung durch die Dichtung 24a verhindert ist. Bei den Ausführungsformen gemäp Figur 5 bis 6 hingegen besteht im Schliepzustand des Ventils eine solche Verbindung am Steuerteil 13 vorbei, wie sich anhand der Figuren 5 bis 7 leicht verifizieren läßt.

## Patentansprüche

1. Ventil (1) zur Steuerung eines unter Druck strömenden, fluiden Mediums mit Einlaßöffnungen (6) und Auslaßöffnungen, mit einem vom Medium axial durchströmten Eingangsteil (4), mit einem relativ zum Eingangsteil (4) axial zwischen einer Schließ- und Offenstellung verschieblichen, hülsenförmigen Steuerteil (13), mit einem ersten, radial vorstehenden, elastischen Dichtring (24b) und mit einer ersten, ringförmigen Dichtkanten (25), die in schließstellung des Steuerteils (13) gegen den ersten Dichtring (24b) abdichtend anpreßbar ist, wobei das verschiebliche Steuerteil (13) von einem Ventilgehäuse (2) umschlossen und der Raum zwischen dem Steuerteil (13) und Ventilgehäuse (2) mit dem unter Druck strömenden, fluiden Medium beaufschlagt ist, so daß am Steuerteil (13) im wesentlichen kein resultierender Druck in Axialrichtung vorliegt und daher das Steuerteil ohne wesentlichen Kraftaufwand verschiebbar ist, ein zweiter, radial vorstehender, elastischer Dichtring (26b) in axialem Abstand vom ersten richtring (24b) vorgesehen ist, und eine zweite, ringförmige Dichtkante (27) in Schließstellung des Steuerteils gegen den zweiten Dichtring (26b) abdichtend anpreßbar ist,
**dadurch gekennzeichnet**, daß die ersten und zweiten ringförmigen Dichtkanten (25, 27) relativ scharf und schneidenartig ausgebildet sind und in Schließstellung des Ventils einen linienhaften, kreisförmigen Dichtungsbereich zwischen den ersten und zweiten Dichtringen (24b, 26b) einerseits und den ersten und zweiten Dichtkanten (25, 27) andererseits bilden.

2. Ventil nach Anspruch 1, dadurch gekennzeichnet, daß von den beiden Dichtringen (24b, 26b) am Ventil (1) jeweils einer (24b) stationär und der andere (26b) zusammen mit dem Steuerschieber (13) beweglich ausgebildet ist, und dem stationären Dichtring (24b) eine zusammen mit dem Steuerschieber (13) bewegliche Dichtkante (25) und dem beweglichen Dichtring (26b) eine stationäre Dichtkante (27) zugeordnet ist (Fig. 1 - 3; 4; 5).

3. Ventil nach Anspruch 2, dadurch gekennzeichnet, daß der erste Dichtring (24b) stationär am Eingangsteil (4), die erste Dichtkante (25) am verschieblichen Steuerteil (13), der zweite Dichtring (26b) am verschieblichen Steuerteil (13) und die zweite Dichtkante (27) stationär am Eingangsteil (4) ausgebildet sind. (Fig. 1 - 3).

4. Ventil nach Anspruch 2, dadurch gekennzeichnet, daß der erste Dichtring (24b) stationär am Eingangsteil (4), die erste Dichtkante (26) am verschieblichen Steuerteil (13), der zweite Dichtring (26b) am verschieblichen Steuerteil (13) und die zweite Dichtkante (27) stationär an einer mit dem Ventilgehäuse (2) verbundenen, die Auslaßöffnung (12) umschließenden Abdeckplatte (9) ausgebildet sind (Fig. 4).

5. Ventil nach Anspruch 2, dadurch gekennzeichnet, daß der erste Dichtring (24b) am verschieblichen Steuerteil (13), die erste Dichtkante (25) am Ventilgehäuse (2), der zweite Dichtring (26b) stationär an einer mit dem Ventilgehäuse (2) verbundenen, die Auslaßöffnung (2) umschließenden Abdeckplatte (9) und die zweite Dichtkante (27) am verschieblichen Steuerteil (13) ausgebildet sind (Fig. 5).

6. Ventil nach Anspruch 1, dadurch gekennzeichnet, daß die beiden Dichtringe (24b, 26b) am Ventil (1) stationär ausgebildet sind und jedem Dichtring (24b, 26b) eine zusammen mit dem Steuerschieber (13) bewegliche Dichtkante (25, 27) zugeordnet ist (Fig. 6).

7. Ventil nach Anspruch 1, dadurch gekennzeichnet, daß die beiden Dichtringe (24b, 26b) zusammen mit dem Steuerschieber (13) beweglich ausgebildet sind, und jedem Dichtring (24b, 26b) eine stationäre Dichtkante (25, 27) zugeordnet ist (Fig. 7).

8. Ventil nach Anspruch 1, dadurch gekennzeichnet, daß in einem von den Dichtringen (24b, 26b) stirnseitig begrenztem, mit fluidem Medium gefüllten Zwischenraum (21a) in Schließstellung beide Dichtringe (24b, 26b) im wesentlichen simultan gegen ihre zugehörigen Dichtkanten (25, 27) abdichtend anpreßbar sind.

9. Ventil nach Anspruch 1, dadurch gekennzeichnet, daß die Dichtringe (24b, 26b) radial vorstehend in Umfangsnuten (24a, 24b) angeordnet sind.

10. Ventil nach Anspruch 1, dadurch gekennzeichnet, daß die Dichtringe (24b, 26b) O-Ringe mit zumindest teilweise runder Querschnittsform sind.

11. Ventil nach Anspruch 1, dadurch gekennzeichnet, daß die Dichtringe (24b, 26b) O-Ringe mit zumindest teilweise eckiger Querschnittsform sind.

12. Ventil nach Anspruch 1, dadurch gekennzeichnet, daß die Dichtringe (24b, 26b) als metallische Vorsprünge ausgebildet sind.

13. Vorrichtung nach Anspruch 1, dadurch gekennzeichnet, daß die Dichtringe (24b, 26b) als ringförmige Kunststoffvorsprünge ausgebildet sind.

14. Vorrichtung nach Anspruch 1, dadurch gekennzeichnet, daß in der äußeren Umfangsfläche des hülsenförmigen Steuerteils (13) eine in Umfangsrichtung verlaufende Nut (14) angeordnet ist, in die ein Antriebsglied (16) zum Verschieben des Steuerteils (13) eingreift.

## Claims

1. Valve (1) for controlling a fluid medium flowing under pressure with inlet opening (6) and outlet opening, with an entry piece (4) through which the medium flows axially, with a sleeve-shaped control piece (13) axially moveable relative to the entry piece (4) between a closed and an open position, with a first radially projecting elastic sealing ring (24b) and a first annular sealing edge (25) which in the closed position of the control piece (13) can be sealingly pressed against the first sealing ring (24b), wherein the moveable control piece (13) is surrounded by a valve housing (2) and the space between the control piece (13) and the valve housing (2) admits the fluid medium flowing under pressure, so that essentially no resulting pressure is applied on the control piece (13) in the axial direction and that the control piece is moveable without substantial effort, a second radially projecting elastic sealing ring (26b) is provided at an axial separation from the first sealing ring (24b) and a second annular sealing edge (27) can be sealingly pressed against the second sealing ring (26b) in the closed position of the control piece, characterized in that the first and second annular sealing edges (25, 27) are formed to be relatively sharp and cutter-like and in the closed position of the valve they form a continuous circular sealing region between the first and second sealing rings (24b, 26b) on the one hand and the first and second sealing edges (25, 27) on the other hand.

2. Valve according to claim 1, characterized in that of the two sealing rings (24b, 26b) on the valve one is stationary and the other is formed to be moveable with the control slide (13), a sealing edge (25) moveable with the control slide (13) is coordinated with the stationary sealing ring (24b) and a stationary sealing edge (27) is coordinated with the moveable sealing ring (26b) (Fig. 1-3; 4;5).

3. Valve according to claim 2, characterized in that the first sealing ring (24b) is formed stationary on the entry piece (4), the first sealing edge (25) is formed on the moveable control piece (13), the second sealing ring (26b) is formed on the moveable control piece (13) and the second sealing edge (27) is formed stationary on the entry piece (4) (Fig 1-3).

4. Valve according to claim 2, characterized in that the first sealing ring (24b) is formed stationary on the entry piece (4), the first sealing edge (26) is formed on the moveable control piece (13), the second sealing ring (26b) is formed on the moveable control piece (13) and the second sealing edge (27) is formed stationary on cover plate (9) joined to the valve housing (2) and surrounding the outlet opening (12) (Fig 4).

5. Valve according to claim 2, characterized in that the first sealing ring (24b) is formed on the moveable control piece (13), the first sealing edge (25) is formed on the valve housing (2), the second sealing ring (26b) is formed stationary on a cover plate (9) joined to the valve housing (2) and surrounding the outlet opening (2) and the second sealing edge (27) is formed on the moveable control piece (13) (Fig 5).

6. Valve according to claim 1, characterized in that the two sealing rings (24b, 26b) are formed stationary on the valve (1) and one sealing edge (25, 27) moveable with the control slide (13) is coordinated with each sealing ring (24b, 26b) (Fig. 6).

7. Valve according to claim 1, characterized in that the two sealing rings (24b, 26b) are formed moveable with control slide (13) and a stationary sealing edge (25, 27) is coordinated with each sealing ring (24b, 26b) (Fig 7).

8. Valve according to claim 1, characterized in that in an intermediate space (21a) limited at the front end by the sealing rings (24b, 26b) and filled with fluid medium, in the closed position both sealing rings (24b, 26b) can be sealingly pressed substantially simultaneously against their respective sealing edges (25, 27).

9. Valve according to claim 1, characterized in that the sealing rings (24b, 26b) are arranged projecting radially from circumferential grooves (24a, 24b).

10. Valve according to claim 1, characterized in that the sealing rings (24b, 26b) are O-rings with at least partially round cross-sectional shape.

11. Valve according to claim 1, characterized in that the sealing rings (24b, 26b) are O-rings with at least partially angular cross-sectional shape.

12. Valve according to claim 1, characterized in that the sealing rings are formed as metallic projections.

13. Apparatus according to claim 1, characterized in that the sealing rings (24b, 26b) are formed as annular plastics projections.

14. Apparatus according to claim 1, characterized in that the outer circumferential surface of the sleeve-shaped control piece (13) there is a groove (14) running circumferentially, in which groove a drive member (16) engages to move the control piece (13).

## Revendications

1. Soupape (1) pour la régulation du débit d'un milieu s'écoulant sous pression, avec des ouvertures d'entrée d'écoulement (6) et des ouvertures de sortie d'écoulement, avec une partie entrée (4) traversée axialement par l'écoulement du milieu, avec une partie commande (13) en forme de douille déplaçable axialement par rapport à la partie entrée (4) entre une position de fermeture et une position d'ouverture, avec une première bague élastique d'étanchéité (24b) faisant saillie radialement et avec une première arête d'étanchéité (25) annulaire, qui, en position de fermeture de la partie commande (13), est susceptible d'être pressée avec étanchéité contre la première bague d'étanchéité (24b), la partie commande (13) déplaçable étant enclose par un corps de soupape (2) et l'espace se trouvant entre la partie commande (13) et le corps de soupape (2) pouvant être exposé au milieu fluide, s'écoulant sous pression, de sorte que sur la partie commande (13) ne se manifeste en direction axiale pratiquement aucune pression résultante et que, de ce fait, la partie commande puisse être déplacée sans déploiement notable de force, une deuxième bague élastique d'étanchéité (26b) faisant saillie radialement étant en outre prévue à distance axiale vis-à-vis de la première bague d'étanchéité (24b), et une deuxième arête d'étanchéité (27) annulaire pouvant être pressée, avec étanchéité, en position de fermeture de la partie commande, contre la deuxième bague d'étanchéité (26b), caractérisée en ce que les première et deuxième arêtes d'étanchéité (25, 27) annulaires sont réalisées avec une arête relativement vive et à la façon d'un tranchant de façon à constituer, en position de fermeture de la soupape, une zone d'étanchéité circulaire linéaire entre les première et deuxième bagues d'étanchéité (24b, 26b), d'une part, et les première et deuxième arêtes d'étanchéité (25, 27), d'autre part.

2. Soupape selon la revendication 1, caractérisée en ce que, des deux bagues d'étanchéité (24b, 26b), sur la soupape (1), chaque fois l'une (24b) est réalisée stationnaire et l'autre (26b) mobile, conjointement avec le tiroir de commande (13), et à la bague d'étanchéité stationnaire (24b) étant associée une arête d'étanchéité (25) qui est mobile conjointement avec le tiroir de commande (13), et à la bague d'étanchéité mobile (26b) étant associée une arête d'étanchéité qui est stationnaire (27) (figures 1 à 3; 4; 5)

3. Soupape selon la revendication 2, caractérisée en ce que la première bague d'étanchéité (24b) est réalisée stationnaire sur la partie entrée (4), la première arête d'étanchéité (25) est réalisée sur la partie commande (13) mobile, la deuxième bague d'étanchéité (26b) est réalisée sur la partie commande (13) mobile, et la deuxième arête d'étanchéité (27) est réalisée stationnaire sur la partie entrée (4) (figures 1 à 3).

4. Soupape selon la revendication 2, caractérisée en ce que la première bague d'étanchéité (24b) est réalisée stationnaire sur la partie entrée (4), la première arête d'étanchéité (26) est réalisée sur la partie commande (13) mobile, la deuxième bague d'étanchéité (26b) est réalisée sur la partie commande (13) mobile, et la deuxième arête d'étanchéité (27) est réalisée stationnaire sur une plaque de recouvrement (9), reliée au corps de soupape (2) et enclosant l'ouverture d'évacuation (12) (figure 4).

5. Soupape selon la revendication 2, caractérisée en ce que la première bague d'étanchéité (24b) est réalisée sur la partie commande (13) mobile, la première arête d'étanchéité (25) est réalisée sur le corps de soupape (2), la deuxième bague d'étanchéité (26b) est réalisée stationnaire sur une plaque de recouvrement (9), reliée au corps de soupape (2) et enclosant l'ouverture d'évacuation (12), et la deuxième arête d'étanchéité (27) est réalisée sur la partie commande (13) mobile (figure 5).

6. Soupape selon la revendication 1, caractérisée en ce que les deux bagues d'étanchéité (24b, 26b) sont réalisées stationnaires sur la soupape (1), et à chaque bague d'étanchéité (24b, 26b) est associée une arête d'étanchéité (25, 27), mobile conjointement au tiroir de commande (13) (figure 6).

7. Soupape selon la revendication 1, caractérisée en ce que les deux bagues d'étanchéité (24b, 26b) sont réalisées mobiles, conjointement avec le tiroir de commande (13), et à chaque bague d'étanchéité (24b, 26b) est associée une arête d'étanchéité (25, 27) stationnaire (figure 7).

8. Soupape selon la revendication 1, caractérisée en ce que, dans un espace intermédiaire (21a), rempli d'un milieu fluide, délimité frontalement par les bagues d'étanchéité (24b, 26b), dans la position de fermeture, les deux bagues d'étanchéité (24b, 26b) sont susceptibles d'être pressées avec étanchéité, de façon pratiquement simultanée, contre leurs arêtes d'étanchéité (25, 27) correspondantes.

9. Soupape selon la revendication 1, caractérisée en ce que les bagues d'étanchéité (24b, 26b) sont disposées en faisant saillie radialement dans des gorges périphériques (24a, 24b).

10. Soupape selon la revendication 1, caractérisée en ce que les bagues d'étanchéité (24b, 26b) sont des joints toriques avec une forme de section transversale au moins partiellement ronde.

11. Soupape selon la revendication 1, caractérisée en ce que les bagues d'étanchéité (24b, 26b) sont des joints toriques avec une section transversale de forme au moins partiellement polygonale.

12. Soupape selon la revendication 1, caractérisée en ce que les bagues d'étanchéité (24b, 26b) sont réalisées sous forme de saillies métalliques.

13. Dispositif selon la revendication 1, caractérisé en ce que les bagues d'étanchéité (24b, 26b) sont réalisées sous forme de saillies en matière synthétique, de forme annulaire.

14. Dispositif selon la revendication 1, caractérisé en ce que, dans la face périphérique extérieure de la partie commande (13) en forme de douille, est disposée une gorge (14) s'étendant dans une direction circonférentielle, dans laquelle s'engage un organe d'entraînement (16) destiné à déplacer la partie commande (13).
